# EUROPEAN PATENT SPECIFICATION

(11) **EP 2 184 928 B1**
(45) Date of publication and mention of the grant of the patent: **26.09.2018**
(21) Application number: 07805916.9
(22) Date of filing: 09.08.2007
(51) Int. Cl.: H04R 1/02, F16M 13/02, F16M 11/04

(54) **SPEAKER MOUNTING DEVICE AND SPEAKER**
LAUTSPRECHERMONTAGEVORRICHTUNG UND LAUTSPRECHER
DISPOSITIF DE MONTAGE DE HAUT-PARLEUR ET HAUT-PARLEUR

(43) Date of publication of application: 12.05.2010
(73) Proprietor: Toa Corporation, Kobe-Shi, Hyogo 650-0046 (JP)
(72) Inventor: SAKANE, Hidenari, Kobe-shi, Hyogo 650-0046 (JP)
(74) Representative: Dehns
(86) International application number: PCT/JP2007/065585
(87) International publication number: WO 2009/019778

(56) References cited:
- JP-U- 02 030 690
- JP-U- 56 095 191
- US-A- 4 860 369
- US-A- 5 331 119
- US-A1- 2004 202 346

## Description

### Technical Field

The present invention relates to a speaker mounting device for mounting a speaker to a wall or the like, and a speaker including the speaker mounting device.

### Background Art

Various speaker mounting devices for mounting a speaker to a wall or the like have been proposed conventionally (see e.g., Patent documents 1 and 2). Among these speaker mounting devices, there is a speaker mounting device including a lock mechanism, as a speaker mounting device which allows easy mounting and dismounting. The speaker mounting device including the lock mechanism includes a wall component and a speaker component. The speaker mounting device basically has a configuration for mounting the speaker component provided at the back surface of the speaker to the wall component fastened to the wall. The wall component includes a fastener member protruding from the side surface. The fastener member is subjected to a force toward the speaker component. The speaker component has a fastening hole in a location corresponding to the fastener member. When the speaker component is placed in a predetermined position of the wall component, the fastener member is inserted into the fastening hole, thereby preventing the speaker component from disengaging from the wall component. In other words, the speaker component is locked. Conversely, by inwardly sliding an unlock lever coupled to the fastener member to cause the fastener member to disengage from the fastening hole and by dismounting the speaker component from the wall component in this state, dismounting of the speaker from the wall is accomplished.
Patent document 1: Japanese Laid-Open Patent Application Publication No. Sho 59-215195
Patent document 2: Japanese Laid-Open Patent Application Publication No. Sho 60-200697
JP 56-095191 U discloses a speaker mounting device according to the preamble of claims 1 and 5.

US 4860369 discloses flat speaker devices which are adapted to be embedded in flat wall surfaces, the devices comprising rod-like screw members mounted to pass through a speaker frame which are threadedly engaged to swinging blades which can be positioned to hold the device in the wall.

US 5331119 discloses a speaker support frame structure which comprises leg members which are associated with a screw which extends through the frame body, the leg members being arranged to engage wall surfaces with an adjustable clamping force.

### Disclosure of the Invention

### Problems to be Solved by the Invention

The speaker mounting device having the above described configuration can be easily unlocked by sliding the unlock lever. In this configuration, however, since the speaker mounted at a relatively high position is easily dismounted using a bar or the like, there is a chance that mischief of dismounting the speaker or theft of the speaker would easily take place.

To prevent mischief or theft, the entire speaker may be firmly mounted to the wall, for example, by using a disengagement prevention tool. In this case, a mounting work and a dismounting work are considerably burdensome.

In view of the above, an object of the present invention is to provide a speaker mounting device which does not permit a dismounting work without using a tool but enables an easy dismounting work using the tool.

### Means for solving the problem

The present invention has been made in view of the above circumstances, and in a first aspect the present invention provides a speaker mounting device comprising: a speaker component provided at a speaker; and a wall component to be provided at a wall; the speaker component being configured to be slid in a backward and downward direction with respect to the wall component to be mounted to the wall component; the speaker component being configured to be slid in a forward and upward direction with respect to the wall component to be dismounted from the wall component; wherein one of the speaker component and the wall component includes an insertion portion, and the other of the speaker component and the wall component includes an inserted section which receives the insertion portion in a state in which the speaker component is mounted to the wall component; the speaker component includes a movement prevention member located below the insertion portion or the inserted section and a shaft member coupled to the movement prevention member; the shaft member is rotatable to cause the movement prevention member to rotate around the shaft member which has a rotational axis; the shaft member has an outer end of a screw head shape or a bolt head shape; and the movement prevention member, in a state in which the speaker component is mounted to the wall component, is configured to be positioned in the backward and downward direction relative to the wall component by rotation of the shaft member so as to prevent the speaker component from moving in the forward and upward direction.

As used herein, the term "rotational trajectory" refers to a trajectory of a sector-form with a substantial thickness which is drawn by the rotation of the entire movement prevention member.

In accordance with the above configuration, by rotating the movement prevention member so that the wall component is positioned in the forward and upward direction relative to the movement prevention member, the movement of the speaker component with respect to the wall component can be prevented (the speaker component is locked to the wall component), and a tool is required to rotate the movement prevention member.

In the above speaker mounting device, the speaker component may further include an accommodating section for accommodating the movement prevention member; the movement prevention member is entirely accommodated within the accommodating section by rotation of the shaft member in one direction; and at least part of the movement prevention member protrudes outward from the accommodating section by rotation of the shaft member in an opposite direction, to prevent the speaker component from moving in the forward and upward direction.

In such a configuration, by rotating the shaft member in either direction without considering the angle, prevention of the movement of the speaker component and unlocking of the speaker component are accomplished.

In the speaker mounting device, the shaft member may be coupled to the movement prevention member by penetrating the movement prevention member; the shaft member and the movement prevention member may have a relationship between a male thread and a female thread; and the movement prevention member may be configured to move in the upward direction with respect to the shaft member by rotation of the shaft member in the opposite direction with respect to the movement prevention member.

In such a configuration, when the shaft member is rotated in the opposite direction to cause the movement prevention member to protrude outward from the accommodating section, and in this state, the shaft member is further rotated in the opposite direction, the movement prevention member moves in the upward direction with respect to the shaft member and contacts the wall component. Thus, the wall component is tightly contacted by the movement prevention member, thereby allowing the speaker component and the wall component to be firmly coupled to each other.

In the above speaker mounting device, the speaker component may further include an outer peripheral section located to surround the accommodating section; a tip end of the outer peripheral section may be higher than a tip end of the movement prevention member placed in a protruding position; and the opposite direction may be a left direction.

In such a configuration, the direction in which the shaft member is rotated to prevent the movement of the speaker component is different from the direction in which the screw is tightened in normal cases, and the movement of the movement prevention member is invisible from outside. As a result, it is possible to prevent the speaker from being dismounted by a person who has a wrong idea of dismounting the speaker for mischief or theft purposes.
In a second aspect the present invention provides a speaker mounting device comprising: a speaker component provided at a speaker; and a wall component to be provided at a wall; the speaker component being configured to be slid in a backward and downward direction with respect to the wall component to be mounted to the wall component; the speaker component being configured to be slid in a forward and upward direction with respect to the wall component to be dismounted from the wall component; wherein one of the speaker component and the wall component includes an insertion portion, and the other of the speaker component and the wall component includes an inserted section which receives the insertion portion in a state in which the speaker component is mounted to the wall component; the wall component includes a movement prevention member and a shaft member coupled to the movement prevention member; the shaft member is rotatable to cause the movement prevention member to rotate around the shaft member which has a rotational axis; the shaft member has an outer end of a screw head shape or a bolt head shape; and the movement prevention member, when the speaker component is mounted to the wall component, is configured to be positioned in the forward and upward direction relative to the speaker component by rotation of the shaft member so as to prevent the speaker component from moving in the forward and upward direction. Even in such a configuration in which the wall component includes the movement prevention member and the shaft member, the same advantages as that described above is achieved.

A speaker of the present invention comprises the above speaker mounting device.

### Advantage of the invention

As should be clearly understood from the above description, in accordance with the present invention, by rotating the movement prevention member so that the wall component is positioned in an upward and forward direction relative to the movement prevention member, the movement of the speaker component with respect to the wall component can be prevented (the speaker component is locked to the wall component), and a tool is required to rotate the movement prevention member. Therefore, in accordance with the present invention, it is possible to provide a speaker mounting device which does not permit a dismounting work without using a tool and enables an easy dismounting work using the tool.

### Brief Description of the Drawings

[Fig. 1] Fig. 1 is a perspective view of a speaker mounting device according to the present invention.
[Fig. 2] Fig. 2 is a schematic view of the interior of an accommodating section of the present invention, when viewed from below.
[Fig. 3] Fig. 3 is a view of a wall component of the present invention, when viewed from obliquely forward.
[Fig. 4] Fig. 4 is a view showing a state where the speaker component and the wall component are joined to each other.

### Best Mode for Carrying Out the Invention

Hereinafter, an embodiment of a speaker mounting device of the present invention will be described with reference to the drawings.

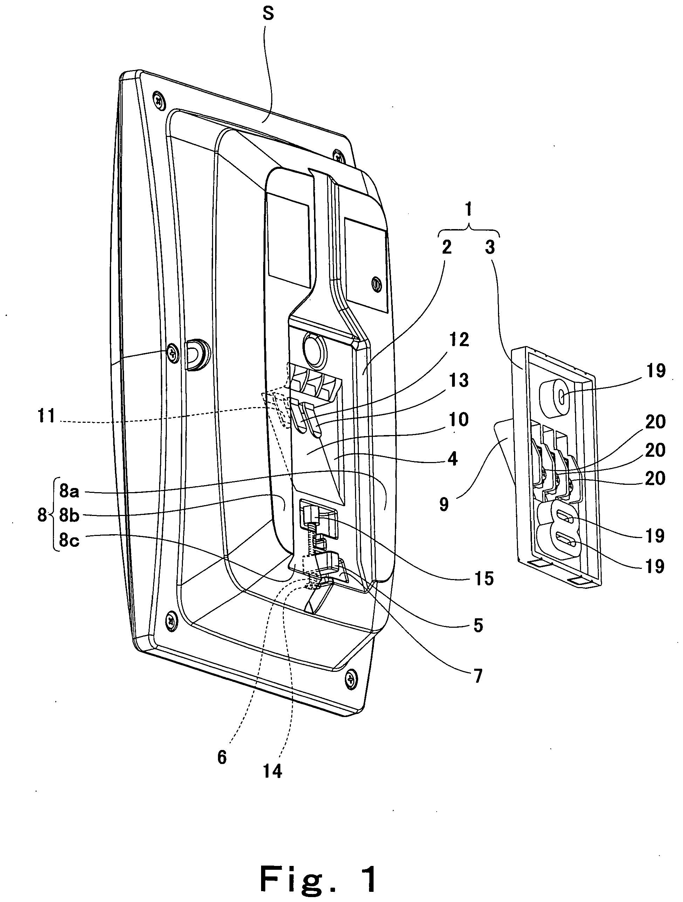

First of all, a mounting device 1 of this embodiment will be described. Fig.1 is a perspective view of the speaker mounting device 1 according to this embodiment. As shown in Fig. 1, the speaker mounting device 1 according to this embodiment includes a speaker component 2 and a wall component 3, as major components. Hereinafter, these components will be described in sequence. The terms "above", "below", "left" and "right" used in the following description are "above", "below", "left" and "right" when viewed from the back surface side of the speaker S.

The speaker component 2 is provided at a speaker. In this embodiment, the speaker component 2 is integral with the back surface of the speaker S. As shown in Fig. 1, the speaker component 2 includes an inserted section 4, a movement prevention member 5, a shaft member 6, an accommodating section 7, and an outer peripheral section 8. The detailed structures of these constituents 4 to 8 are as follows.

The inserted section 4 is a section into which an insertion portion 9 of the wall component 3 is inserted. As shown in Fig. 1, the inserted section 4 is positioned at a substantially center of the back surface of a speaker S and is recessed to a great depth. The inserted section 4 has a bottom surface 10 which is tilted such that the depth of the recess increases in an upward direction. Three metal plates 11 to 13 protrude from the inserted section 4 such that they are located on the same plane parallel to the bottom surface 10. The metal plates 11 to 13 are input terminals of the speaker S and are adapted to receive a signal associated with a sound wave output from the speaker S.

The movement prevention member 5 serves to prevent the wall component 3 from moving with respect to the speaker component 2 (or the speaker component 2 from moving with respect to the wall component 3). As shown in Fig. 1, the movement prevention member 5 is located below the inserted section 4 and is coupled to the shaft member 6 described later. The movement prevention member 5 is rotatable around the shaft member 6 which is a rotational axis. The prevention member 5 rotates so as to draw a rotational trajectory which is a sector-form trajectory formed around the shaft member 6. Fig. 1 shows a state where the movement prevention member 5 is placed in a protruding position. In the protruding position, the tip end of the movement prevention member 5 protrudes backward (at a back side) relative to the opening plane of the inserted section 4. The movement prevention member 5 and the shaft member 6 have a relationship between a male thread and a female thread. These members are coupled to each other without a gap at the threads. When the shaft member 6 is rotated, the movement prevention member 5 rotates due to a friction generated by the rotation.

The shaft member 6 serves to operate the movement prevention member 5. As shown in Fig. 1, the shaft member 6 extends vertically and is coupled to the movement prevention member 5. The shaft member 6 is rotatably mounted at vertical both sides of the movement prevention member 5. According to the rotation of the shaft member 6, the movement prevention member 5 rotates. The shaft member 6 has a lower end (outer end) 14 which has a screw head shape and an upper end (inner end) 15 which is larger than the diameter of a region in the vicinity of the center. They are entirely securely fastened together. By rotating the screw head (lower end) 14, the entire shaft member 6, including the large-diameter portion 15 rotates integrally. As described above, the portion of the shaft member 6 which is coupled to the movement prevention member 5 serves as the male thread. This thread is a "right-hand thread" which allows the male thread (shaft member 6) to move to an advanced position with respect to the female thread (movement prevention member 5) by rotating the male thread (shaft member 6) to the right. In other words, by rotating the male thread (shaft member 6) to the right, the female thread (movement prevention member 5) is placed in a retracted position with respect to the male thread (shaft member 6). Since the lower end 14 of the shaft member 6 is the screw head, a tool such as a driver is required to rotate the shaft member 6, and hence a tool is required to rotate the movement prevention member 5. Note that the lower end 14 of the shaft member 6 may have a bolt head shape instead of the screw head shape. In this configuration, also, the movement prevention member 5 cannot be rotated without using a tool. The screw head may have a hexagonal shape or other special shape, instead of a general plus (+) shape. In this configuration, the movement prevention member 5 cannot be rotated using a general tool.

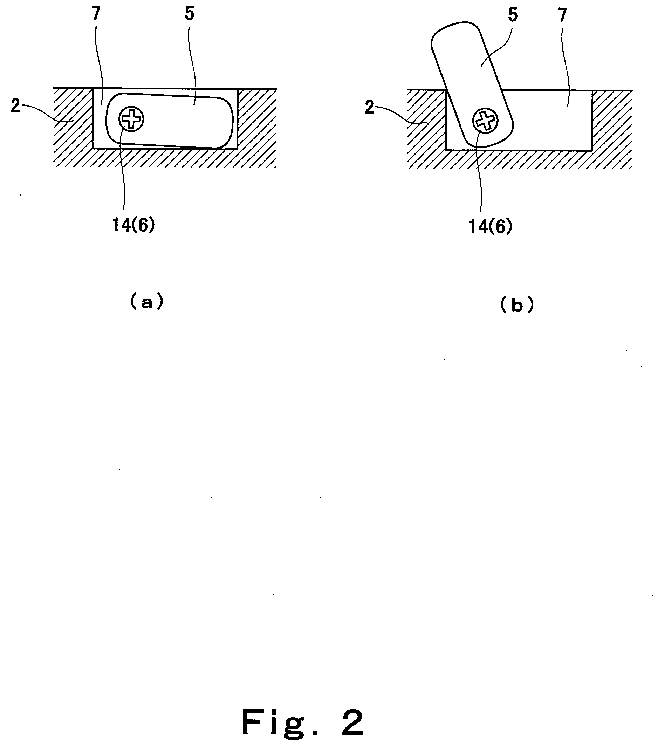

The accommodating section 7 serves to accommodate the movement prevention member 5. As shown in Fig. 1, the accommodating section 7 is located below the inserted section 4 and is recessed. Inside the accommodating section 7, the shaft member 6 extends vertically. The movement prevention member 5 is rotatable around the shaft member 6 which is the rotational axis, inside the accommodating section 7. Fig. 2 is a schematic view of the interior of the accommodating section 7 when viewed from below. As shown in Fig. 2, the lateral width of the accommodating section 7 is larger than the longitudinal length of the movement prevention member 5. The shaft member 6 is positioned at a left side relative to the center of the accommodating section 7. For this reason, as shown in Fig. 2(a), in a state where the movement prevention member 5 is rotated to the right and retracted in a down position, it is entirely accommodated within the accommodating section 7. On the other hand, as shown in Fig. 2(b), in a state where the movement prevention member 5 is rotated to the left, it is not accommodated within the accommodating section 7 but protrudes outward therefrom with a great amount.

The outer peripheral section 8 is located so as to surround the accommodating section 7. As shown in Fig. 1, the outer peripheral section 8 has a configuration in which a right portion 8a and a left portion 8b are much higher than the tip end of the movement prevention member 5 placed in the protruding position. A lower portion 8c of the outer peripheral section 8 has a tilted surface which is made gradually higher, and the accommodating section 7 is inward relative to the tilted surface. The tip end of the lower portion 8c is slightly higher than the tip end of the movement prevention member 5 placed in the protruding position. This means that the movement of the movement prevention member 5 is invisible when the accommodating section 7 is viewed from the right, from the left and from below. Since the wall component 3 is configured to be positioned above the accommodating section 7, the movement of the movement prevention member 5 is invisible from above as well. The constituents 4 to 8 of the speaker component 2 have been described above.

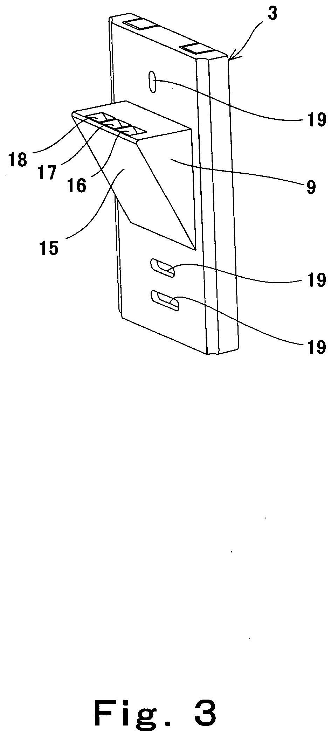

The wall component 3 is provided at (fastened to) the wall. Fig. 3 is a view of the wall component 3, when viewed from obliquely forward. As shown in Fig. 3, the wall component 3 includes the insertion portion 9. The insertion portion 9 is configured to be inserted into the inserted section 4 of the speaker component 2. The insertion portion 9 has a slightly smaller width than the inserted section 4. Since the insertion portion 9 protrudes forward with a great amount and a front surface 15 is tilted, the insertion portion 9 protrudes forward with a greater amount in an upward direction. The front surface 15 of the insertion portion 9 is equal in tilting angle to the bottom surface 10 of the inserted section 4. The insertion portion 9 has three metal plate insertion holes 16 to 18 on an upper surface thereof. The positions of the metal plate insertion holes 16 to 18 respectively correspond to the positions of the metal plates 11 to 13 of the inserted section 4. Signal lines (not shown) are coupled to the metal plate insertion holes 16 to 18, respectively, in the direction from the wall. The wall component 3 has plural thread holes 19 for fastener screws used to fasten the wall component 3 to the wall.

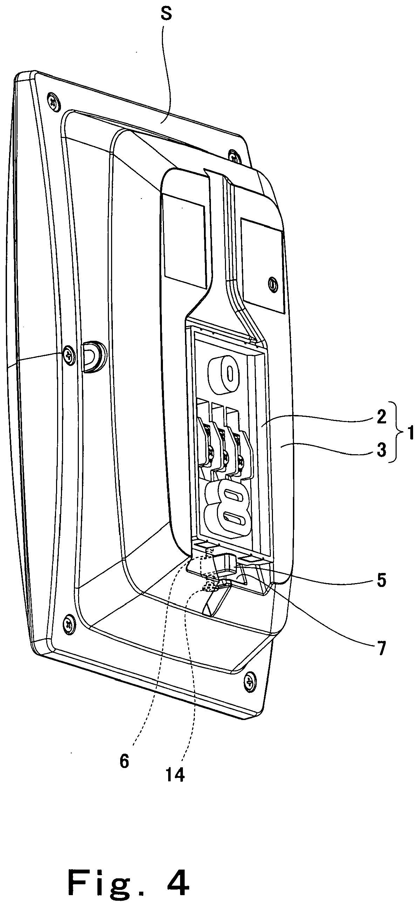

The configuration of the speaker component 2 and the configuration of the wall component 3 have been described above. A positional relationship between the components 2 and 3 which are joined to each other is shown in Fig. 4. Fig. 4 shows a state where the speaker component 2 and the wall component 3 are joined to each other. As shown in Fig. 4, in the state where the speaker component 2 and the wall component 3 are joined to each other, the accommodating section 7 is located below the wall component 3, and the accommodating section 7 and the wall component 3 partially overlap with each other. In the state where the movement prevention member 5 is placed in the protruding position, the tip end thereof is located outward (at the back side) relative to the front surface of the wall component 3. In a state where the speaker component 2 is mounted to the wall component 3, the wall component 3 is located forward and upward (in a second direction) relative to the rotational trajectory of the movement prevention member 5.

Next, how to use the speaker mounting device 1 according to this embodiment will be described.

Initially, the wall component 3 is fastened to the wall. To be specific, the signal lines (not shown) extending to the inside of the wall are coupled to coupling sections 20 provided on the back surface of the wall component 3, and in this state, the wall component 3 is fastened to the wall using fastener screws (not shown).

Then, the speaker component 2 is mounted to the wall component 3. To be specific, the insertion portion 9 of the wall component 3 is inserted into the inserted section 4 of the speaker component 2. At this time, the movement prevention member 5 is rotated to the right to a down position and accommodated into the accommodating section 7. In this state, the speaker component 2 is slid backward and downward (in a first direction) with respect to the wall component 3. By sliding the speaker component 2 such that the front surface 15 of the insertion portion 9 contacts the bottom surface 10 of the inserted section 9, the metal members 11 to 13 protruding from the inserted section 4 are inserted into the metal member insertion holes 16 to 18 of the insertion portion 9, respectively.

Finally, the speaker component 2 is locked to the wall component using the movement prevention member 5 so that the speaker component 2 is prevented from disengaging from the wall component. To be specific, the shaft member 6 is rotated to the left about 90 degrees from below the speaker component 2 using a driver. Thereby, the wall component 3 is positioned forward and upward (in a second direction) relative to the movement prevention member 5 and therefore the speaker component 3 is prevented from moving forward and upward (in the second direction). In this state, the speaker S cannot be dismounted from the wall. As desired, the shaft member 6 is further rotated to the left. As described above, the movement prevention member 5 and the shaft member 6 have a relationship of "right-hand thread." Therefore, when the shaft member 6 is further rotated to the left in the state where the movement prevention member 5 is in contact with the inner surface of the accommodating section 7, the movement prevention member 5 moves upward with respect to the shaft member 6. This enables the movement prevention member 5 to tightly contact the lower end portion of the wall component 3. Therefore, the speaker component 2 can be securely fastened to the wall component 3, and as a result, generation of "chatter" in the speaker can be suppressed.

When the speaker S is dismounted from the wall, the shaft member 6 is rotated to the right, which is a direction opposite to the direction in which the shaft member 6 is rotated to mount the speaker S, thereby allowing the movement prevention member 5 to be accommodated into the accommodating section 7. This unlocks the speaker component 2. By sliding the speaker component 2 with respect to the wall component 3 forward and upward (in the second direction) which is an opposite direction to the direction in which the speaker component 2 is slid when mounting the speaker component 2, the speaker S can be dismounted from the wall.

The configuration of the speaker mounting device 1 and how to use the speaker mounting device 1 according to this embodiment have been described above. As should be appreciated, in accordance with the speaker mounting device 1 according to this embodiment, the speaker S can be mounted to and dismounted from the wall with a very simple work using the driver. In addition, since the driver is required to dismount the speaker S, it is possible to prevent the speaker S from being dismounted for mischief purposes. In accordance with this embodiment, to perform unlocking, the shaft member 6 is rotated to the right, which is an opposite direction to the direction in which the screw is loosened in normal cases. In addition to this, because of the presence of the outer peripheral section 8, the movement of the movement prevention member 5 is invisible from outside. As a result, it is possible to prevent the speaker S from being dismounted by a person who has a wrong idea of dismounting the speaker S for mischief purposes.

Although, in the above embodiment the accommodating section 7 overlaps with the wall component 3 in the state where the speaker component 2 and the wall component 3 are joined to each other (see Fig. 4), the accommodating section 7 may be configured not to overlap with the wall component 3. In this configuration, there is a gap between the wall component 3 and the movement prevention member 5 in the state where the speaker component 2 and the wall component 3 are joined to each other. For this reason, even when the insertion portion 9 of the wall component 3 is not inserted into the inserted section 4 of the speaker component 2 to a sufficient depth, the movement prevention member 5 can be rotated (protruded) without contacting the wall component 3. Such a configuration is very advantageous when the insertion portion 9 and the inserted section 4 are tightly fitted to each other.

Although, in the above embodiment movement prevention member 5 is positioned below the wall component 3 in the state where the speaker component 2 and the wall component 3 are joined to each other, the movement prevention member 5 may be positioned inside the wall component 3. In this case, the wall component 3 has a portion at a position corresponding to the movement prevention member 5, into which the movement prevention member 5 is accommodated. In such a configuration, it is not necessary to set the tip end of the outer peripheral section 8 considerably high in order to make the movement prevention member 5 invisible from outside.

Although, in the above embodiment the wall component 3 includes the insertion portion 9 and the speaker component 2 includes the inserted section 4, the wall component 3 may include the inserted section 4 and the speaker component 2 may include the insertion portion 9. Having described above that the speaker component 2 includes the movement prevention member 5, the wall component 3 may include the movement prevention member 5, in the same manner. In either case, the advantage obtained in the above described embodiment can be achieved.

Having described above that the movement prevention member 5 protrudes due to the rotational friction generated by rotating the shaft member 6, it may protrude along a guide. To be specific, a certain gap is formed at a coupling portion where the shaft member 6 is coupled to the movement prevention member 5, and the movement prevention member 5 is configured to move upward (forward relative to the rotational axis) without rotating, by rotating the shaft member 6. In addition, a guide having a shape for allowing the movement prevention member 5 to protrude as it moves upward (forward relative to the rotational axis) is provided. In such a configuration, the advantage obtained in the above described embodiment can be achieved.

### INDUSTRIAL APPLICABILITY

As should be appreciated from the above, the present invention provides a speaker mounting device which does not permit a dismounting work without using a tool but enables an easy dismounting work using the tool. Therefore, the speaker mounting device is useful in a technical field of a speaker.

## Claims

1. A speaker mounting device (1) comprising:
a speaker component (2) provided at a speaker (S); and
a wall component (3) to be provided at a wall;
the speaker component being configured to be slid in a backward and downward direction with respect to the wall component to be mounted to the wall component;
the speaker component being configured to be slid in a forward and upward direction with respect to the wall component to be dismounted from the wall component;
wherein
one of the speaker component and the wall component includes an insertion portion (9), and the other of the speaker component and the wall component includes an inserted section (4) which receives the insertion portion in a state in which the speaker component is mounted to the wall component; **characterized in that**
the speaker component includes a movement prevention member (5) located below the insertion portion or the inserted section and a shaft member (6) coupled to the movement prevention member;
the shaft member is rotatable to cause the movement prevention member to rotate around the shaft member which has a rotational axis;
the shaft member has an outer end (14) of a screw head shape or a bolt head shape; and
the movement prevention member, in a state in which the speaker component is mounted to the wall component, is configured to be positioned in the backward and downward direction relative to the wall component by rotation of the shaft member so as to prevent the speaker component from moving in the forward and upward direction.

2. The speaker mounting device according to Claim 1,
wherein the speaker component (2) further includes an accommodating section (7) for accommodating the movement prevention member (5);
the movement prevention member is entirely accommodated within the accommodating section by rotation of the shaft member (6) in one direction; and
at least part of the movement prevention member protrudes outward from the accommodating section by rotation of the shaft member in an opposite direction, to prevent the speaker component from moving in the forward and upward direction.

3. The speaker mounting device according to Claim 2,
wherein the shaft member (6) is coupled to the movement prevention member (5) by penetrating the movement prevention member;
the shaft member (6) and the movement prevention member (5) have a relationship between a male thread and a female thread; and
the movement prevention member (5) is configured to move in the upward direction with respect to the shaft member (6) by rotation of the shaft member in the opposite direction with respect to the movement prevention member.

4. The speaker mounting device according to Claim 2 or 3,
wherein the speaker component (2) further includes an outer peripheral section (8) located to surround the accommodating section (7);
a tip end of the outer peripheral section is higher than a tip end of the movement prevention member (5) placed in a protruding position; and
the opposite direction is a left direction.

5. A speaker mounting device (1) comprising:
a speaker component (2) provided at a speaker (S); and
a wall component (3) to be provided at a wall;
the speaker component being configured to be slid in a backward and downward direction with respect to the wall component to be mounted to the wall component;
the speaker component being configured to be slid in a forward and upward direction with respect to the wall component to be dismounted from the wall component;
wherein
one of the speaker component and the wall component includes an insertion portion (9), and the other of the speaker component and the wall component includes an inserted section (4) which receives the insertion portion in a state in which the speaker component is mounted to the wall component; **characterized in that**
the wall component includes a movement prevention member (5) and a shaft member (6) coupled to the movement prevention member;
the shaft member is rotatable to cause the movement prevention member to rotate around the shaft member which has a rotational axis;
the shaft member has an outer end (14) of a screw head shape or a bolt head shape; and
the movement prevention member, when the speaker component is mounted to the wall component, is configured to be positioned in the forward and upward direction relative to the speaker component by rotation of the shaft member so as to prevent the speaker component from moving in the forward and upward direction.

6. A speaker (S) comprising the speaker mounting device (1) according to any one of Claims 1 to 5.

## Patentansprüche

1. Lautsprechermontagevorrichtung (1), umfassend:
eine Lautsprecherkomponente (2), die an einem Lautsprecher (S) bereitgestellt ist; und
eine Wandkomponente (3), die an einer Wand bereitgestellt ist;
wobei die Lautsprecherkomponente konfiguriert ist, in Bezug auf die Wandkomponente, die an der Wandkomponente montiert werden soll, in einer Rückwärts- und Abwärtsrichtung verschoben zu werden;
wobei die Lautsprecherkomponente konfiguriert ist, in Bezug auf die Wandkomponente, die von der Wandkomponente demontiert werden soll, in einer Vorwärts- und Aufwärtsrichtung verschoben zu werden;
wobei
eine der Lautsprecherkomponente und der Wandkomponente einen Einführabschnitt (9) enthält,
und die andere der Lautsprecherkomponente und der Wandkomponente einen eingeführten Abschnitt (4) enthält,
der den Einführabschnitt in einem Zustand aufnimmt, in dem die Lautsprecherkomponente an der Wandkomponente montiert ist;
**dadurch gekennzeichnet, dass**
die Lautsprecherkomponente ein Bewegungsverhinderungselement (5), das unter dem Einführabschnitt oder dem eingeführten Abschnitt angeordnet ist, und ein Wellenelement (6) enthält, das mit dem Bewegungsverhinderungselement gekoppelt ist;
das Wellenelement drehbar ist, um zu bewirken, dass sich das Bewegungsverhinderungselement um das Wellenelement dreht, das eine Drehachse aufweist;
das Wellenelement ein äußeres Ende (14) einer Schraubenkopfform oder einer Bolzenkopfform aufweist; und
das Bewegungsverhinderungselement in einem Zustand, in dem die Lautsprecherkomponente an der Wandkomponente montiert ist, konfiguriert ist, durch Drehung des Wellenelements in der Rückwärts- und Abwärtsrichtung relativ zu der Wandkomponente positioniert zu werden, um so zu verhindern, dass sich die Lautsprecherkomponente in der Vorwärts- und Aufwärtsrichtung bewegt.

2. Lautsprechermontagevorrichtung nach Anspruch 1,
wobei die Lautsprecherkomponente (2) weiter einen Aufnahmeabschnitt (7) zum Aufnehmen des Bewegungsverhinderungselements (5) enthält;
das Bewegungsverhinderungselement vollständig in dem Aufnahmeabschnitt durch Drehung des Wellenelements (6) in einer Richtung aufgenommen ist; und
mindestens ein Teil des Bewegungsverhinderungselements durch Drehung des Wellenelements in einer entgegengesetzten Richtung von dem Aufnahmeabschnitt nach außen hervorsteht, um zu verhindern, dass sich die Lautsprecherkomponente in der Vorwärts- und Aufwärtsrichtung bewegt.

3. Lautsprechermontagevorrichtung nach Anspruch 2,
wobei das Wellenelement (6) mit dem Bewegungsverhinderungselement (5) gekoppelt ist, indem es das Bewegungsverhinderungselement durchdringt;
das Wellenelement (6) und das Bewegungsverhinderungselement (5) eine Beziehung zwischen einem Außengewinde und einem Innengewinde haben; und
das Bewegungsverhinderungselement (5) konfiguriert ist, sich in Bezug auf das Wellenelement (6) durch Drehung des Wellenelements in der entgegengesetzten Richtung in Bezug auf das Bewegungsverhinderungselement in der Aufwärtsrichtung zu bewegen.

4. Lautsprechermontagevorrichtung nach Anspruch 2 oder 3,
wobei die Lautsprecherkomponente (2) weiter einen Außenumfangsabschnitt (8) enthält, der angeordnet ist, den Aufnahmeabschnitt (7) zu umgeben;
ein Spitzenende des Außenumfangsabschnitts höher als ein Spitzenende des Bewegungsverhinderungselements (5) ist, das in einer hervorstehenden Position angeordnet ist; und
die entgegengesetzte Richtung eine linke Richtung ist.

5. Lautsprechermontagevorrichtung (1), umfassend:
eine Lautsprecherkomponente (2), die an einem Lautsprecher (S) bereitgestellt ist; und
eine Wandkomponente (3), die an einer Wand bereitgestellt ist;
wobei die Lautsprecherkomponente konfiguriert ist, in Bezug auf die Wandkomponente, die an der Wandkomponente montiert werden soll, in einer Rückwärts- und Abwärtsrichtung verschoben zu werden;
wobei die Lautsprecherkomponente konfiguriert ist, in Bezug auf die Wandkomponente, die von der Wandkomponente demontiert werden soll, in einer Vorwärts- und Aufwärtsrichtung verschoben zu werden;
wobei
eine der Lautsprecherkomponente und der Wandkomponente einen Einführabschnitt (9) enthält,
und die andere der Lautsprecherkomponente und der Wandkomponente einen eingeführten Abschnitt (4) enthält,
der den Einführabschnitt in einem Zustand aufnimmt, in dem die Lautsprecherkomponente an der Wandkomponente montiert ist;
**dadurch gekennzeichnet, dass**
die Wandkomponente ein Bewegungsverhinderungselement (5) und ein Wellenelement (6) enthält, das mit dem Bewegungsverhinderungselement gekoppelt ist;
das Wellenelement drehbar ist, um zu bewirken, dass sich das Bewegungsverhinderungselement um das Wellenelement dreht, das eine Drehachse aufweist;
das Wellenelement ein äußeres Ende (14) einer Schraubenkopfform oder einer Bolzenkopfform aufweist; und
das Bewegungsverhinderungselement, wenn die Lautsprecherkomponente an der Wandkomponente montiert ist, konfiguriert ist, durch Drehung des Wellenelements in der Vorwärts- und Aufwärtsrichtung relativ zu der Wandkomponente positioniert zu werden, um so zu verhindern, dass sich die Lautsprecherkomponente in der Vorwärts- und Aufwärtsrichtung bewegt.

6. Lautsprecher (S), der die Lautsprechermontagevorrichtung (1) nach einem der Ansprüche 1 bis 5 umfasst.

## Revendications

1. Dispositif de montage de haut-parleur (1) comprenant :
un composant de haut-parleur (2) disposé au niveau d'un haut-parleur (S) ; et
un composant de paroi (3) à disposer au niveau d'une paroi ;
le composant de haut-parleur étant configuré pour être coulissé dans une direction vers l'arrière et vers le bas par rapport au composant de paroi pour être monté sur le composant de paroi ;
le composant de haut-parleur étant configuré pour coulisser dans une direction vers l'avant et vers le haut par rapport au composant de paroi pour être démonté du composant de paroi ;
dans lequel
un du composant de haut-parleur et du composant de paroi comprend une partie d'insertion (9),
et l'autre du composant de haut-parleur et du composant de paroi comprend une section insérée (4) qui reçoit la partie d'insertion dans un état dans lequel le composant de haut-parleur est monté sur le composant de paroi ;
**caractérisé en ce que**
le composant de haut-parleur comprend un élément de blocage de mouvement (5) situé au-dessous de la partie d'insertion ou de la section insérée et un élément d'arbre (6) couplé à l'élément de blocage de mouvement ;
l'élément d'arbre peut tourner pour amener l'élément de blocage de mouvement à tourner autour de l'élément d'arbre qui a un axe de rotation ;
l'élément d'arbre a une extrémité extérieure (14) sous une forme de tête de vis ou une forme de tête de boulon ; et
l'élément de blocage de mouvement, dans un état dans lequel le composant de haut-parleur est monté sur le composant de paroi, est configuré pour être positionné dans la direction vers l'arrière et vers le bas par rapport au composant de paroi par rotation de l'élément d'arbre de manière à empêcher le composant de haut-parleur de se déplacer dans la direction vers l'avant et vers le haut.

2. Dispositif de montage de haut-parleur selon la revendication 1,
dans lequel le composant de haut-parleur (2) comprend en outre une section de logement (7) pour loger l'élément de blocage de mouvement (5) ;
l'élément de blocage de mouvement est entièrement logé dans la section de logement par rotation de l'élément d'arbre (6) dans une direction ; et
au moins une partie de l'élément de blocage de mouvement fait saillie vers l'extérieur par rapport à la section de logement par rotation de l'élément d'arbre dans une direction opposée, pour empêcher le composant de haut-parleur de se déplacer dans la direction vers l'avant et vers le haut.

3. Dispositif de montage de haut-parleur selon la revendication 2,
dans lequel l'élément d'arbre (6) est couplé à l'élément de blocage de mouvement (5) en pénétrant dans l'élément de blocage de mouvement ;
l'élément d'arbre (6) et l'élément de blocage de mouvement (5) ont une relation entre un filetage mâle et un filetage femelle ; et
l'élément de blocage de mouvement (5) est configuré pour se déplacer dans la direction vers le haut par rapport à l'élément d'arbre (6) par rotation de l'élément d'arbre dans la direction opposée par rapport à l'élément de blocage de mouvement.

4. Dispositif de montage de haut-parleur selon la revendication 2 ou 3,
dans lequel le composant de haut-parleur (2) comprend en outre une section périphérique extérieure (8) disposée pour entourer la section de logement (7) ;
une extrémité de pointe de la section périphérique extérieure est plus élevée qu'une extrémité de pointe de l'élément de blocage de mouvement (5) placé dans une position en saillie ; et
la direction opposée est une direction gauche.

5. Dispositif de montage de haut-parleur (1) comprenant :
un composant de haut-parleur (2) disposé au niveau d'un haut-parleur (S) ; et
un composant de paroi (3) à disposer au niveau d'une paroi ;
le composant de haut-parleur étant configuré pour coulisser dans une direction vers l'arrière et vers le bas par rapport au composant de paroi pour être monté sur le composant de paroi ;
le composant de haut-parleur étant configuré pour coulisser dans une direction vers l'avant et vers le haut par rapport au composant de paroi pour être démonté du composant de paroi ;
dans lequel
un du composant de haut-parleur et du composant de paroi comprend une partie d'insertion (9),
et l'autre du composant de haut-parleur et du composant de paroi comprend une section insérée (4) qui reçoit la partie d'insertion dans un état dans lequel le composant de haut-parleur est monté sur le composant de paroi ;
**caractérisé en ce que**
le composant de paroi comprend un élément de blocage de mouvement (5) et un élément d'arbre (6) couplé à l'élément de blocage de mouvement ;
l'élément d'arbre peut tourner pour amener l'élément de blocage de mouvement à tourner autour de l'élément d'arbre qui a un axe de rotation ;
l'élément d'arbre a une extrémité extérieure (14) sous une forme de tête de vis ou une forme de tête de boulon ; et
l'élément de blocage de mouvement, quand le composant de haut-parleur est monté sur le composant de paroi, est configuré pour être positionné dans la direction vers l'avant et vers le haut par rapport au composant de haut-parleur par rotation de l'élément d'arbre de manière à empêcher le composant de haut-parleur de se déplacer dans la direction vers l'avant et vers le haut.

6. Haut-parleur (S) comprenant un dispositif de montage de haut-parleur (1) selon l'une quelconque des revendications 1 à 5.
